# EUROPEAN PATENT SPECIFICATION

(11) **EP 4 269 758 B1**
(45) Date of publication and mention of the grant of the patent: **12.03.2025**
(21) Application number: 22170413.3
(22) Date of filing: 28.04.2022
(51) Int. Cl.: F01K 25/10

(54) **METHOD AND FACILITY FOR RECOVERING ENERGY**
VERFAHREN UND ANLAGE ZUR ENERGIERÜCKGEWINNUNG
PROCÉDÉ ET INSTALLATION DE RÉCUPÉRATION D'ÉNERGIE

(43) Date of publication of application: 01.11.2023
(73) Proprietor: Borealis AG, 1020 Vienna (AT)
(72) Inventor: ERIKSSON, Erik, 444 86 Stenungsund (SE); ANDTSJÖ, Henrik, 06150 Porvoo (FI); VISURI, Juha, 02680 Espoo (FI); HEDVALL, Claes, 444 86 Stenungsund (SE); ZITTING, Samuli, 06850 Kulloo (FI); OUNI, Tuomas, 06850 Kulloo (FI); MATIKAINEN, Pasi, 06850 Kulloo (FI); KUUSISTO, Mika, 06101 Porvoo (FI); VIHAVAINEN, Miika, 06850 Kulloo (FI); ELOVAINIO, Erno, 06101 Porvoo (FI); ERNST, Peter, 2320 Schwechat (AT)
(74) Representative: Maiwald GmbH

(56) References cited:
- EP-B1- 2 651 982
- WO-A1-2008/124868
- WO-A1-2011/043761
- WO-A1-2011/142414
- WO-A1-2020/254727
- US-A1- 2010 307 169
- US-A1- 2011 309 635
- US-A1- 2014 352 295

## Description

The present invention relates to a method for recovering energy in which heat is transferred to a first heat transfer fluid, the heated first heat transfer fluid is compressed and the compressed heat transfer fluid is used for vaporizing an aqueous condensate to steam, which can be used for heat recovery. The invention further relates to a facility for recovering steam and the use of one or more means for compressing a heated first heat transfer fluid for compressing a heated first heat transfer fluid to obtain a compressed first heat transfer fluid having a pressure p₂ for transferring heat and vaporizing an aqueous condensate.

### Technical background

In connection with the endeavours for reducing carbon dioxide emission one task is to reduce consumption of carbonaceous primary energy.

Thereby one focus also turned on recovering energy in form of heated or compressed fluids, which can be used as source of energy, e.g. in industrial processes.

Industrial processes, like chemical production processes, such as processes for polymerizing polymers, often consume a lot of thermal or electrical energy, e.g. for heating or boiling streams to the required temperature and pressure for use or reuse or energizing the production facility of the industrial process.

On the other hand at lot of waste heat is produced, e.g. by cooling product streams. However, most of these cooling streams have a too low temperature to be directly reused as heating media or producing electrical energy.

As an example, well established licensing multistage polymerization processes for polymerizing polyolefins are, amongst others, e.g. Borstar^{®} from Borealis AG or Spheripol^{™} from LyondellBasell. In said processes two or more polymerization stages are connected in series followed by a downstream process for processing the polymerized polyolefin. In each of the polymerization stages and the downstream process waste heat from cooling down the product streams is obtained which presently is mostly wasted.

WO 2009/010514 A1 and WO 2011/000925 A1 disclose methods for recovering heat from the cooling fluid used for cooling a polymerization reaction in a loop reactor by transferring thermal energy from said cooling fluid to a working fluid in one heat exchanging step, whereby the working fluid is phase converted thereby providing energy in form of heat and/or electrical and/or thermal power back to the polymerization process. These methods, however, are only adapted for the polymerization processes in loop reactors and require several intermediate streams for transferring thermal energy, which inevitably leads to energy loss and reduced efficiency.

US 2011/ 309635 describes a device for generating electricity (1) comprising: a first heat pump (3) provided with a first closed circuit (15) in which a first heat-transfer fluid circulates, and with a first heat exchanger (17) between the first heat-transfer fluid and a flow of atmospheric air in which the flow of atmospheric air transfers a quantity of heat to the first heat-transfer fluid, at least a second heat pump (5), provided with a second closed circuit (23) in which a second heat-transfer fluid circulates, and with a second heat exchanger (25) between the second heat-transfer fluid and a third heat-transfer fluid in which the second heat-transfer fluid transfers a quantity of heat to the third heat-transfer fluid; means for transferring a quantity of heat from the first heat-transfer fluid to the second heat-transfer fluid; a third closed circuit (9), in which the third heat-transfer fluid circulates; a turbine (11) inserted on the third closed circuit (9) and driven by the third heat-transfer fluid; an electric generator (13), mechanically driven by the turbine (11).

US 2010/307169 relates to a trigeneration system comprising a cooling loop and a heat/power loop connected by a heat exchanger. Energy available at the high side of the cooling loop is transferred from the cooling loop to the heat/power loop by the heat exchanger. This energy is put to use by the heat/power loop to produce heat and power.

WO 2020/254727 describes a binary cycle power system (100) for generating electrical power. The system comprises a heat exchanger (116) for evaporating a first fluid (106), a turbine converter (120), an electrical generator (122), and a first condenser (124) for condensing the evaporated first fluid. The turbine converter converts energy of the evaporated first fluid to mechanical energy and the electrical generator generates the electrical power from the mechanical energy. The heat exchanger is a second condenser (116), which is a part of a heat pump (110) that transfers heat from a second fluid (108) circulating in the heat pump to the first fluid so that the first fluid evaporates.

WO 2008/124868 relates to a power generation system (100) including a working fluid (6) circulating around a closed working fluid circuit (101) which includes means (5) to superheat the working fluid, energy conversion means (7) adapted to convert internal energy of the superheated working fluid vapour to useful energy and latent heat recovery means, wherein the latent heat recovery means includes means to retain, recover or accumulate latent heat, and the system includes means to return a proportion of the latent heat to the working fluid before or as it enters the working fluid heating means (5).

Thus, there is a need for a method for recovering energy with high efficiency, which can be applied for all kinds of waste heat produced not only in industrial processes but also in other circumstances in which waste heat is produced, such as power generation, engines, electronics or housing, only to mention several examples.

It has surprisingly been found that when transferring heat from a hot fluid stream from any heat source to a first heat transfer fluid, thereby obtaining a heated first heat transfer fluid, said heated first heat transfer fluid can be efficiently subjected to one or more compressing steps for producing a compressed first heat transfer fluid having a sufficient pressure for vaporizing an aqueous condensate to obtain a steam stream which can be used e.g. as heating medium for energy recovery.

### Summary of the invention

The present invention relates to a method for recovering energy comprising the steps of:
a) Providing a hot fluid stream;
b) Thermally contacting the hot fluid stream with a first heat transfer fluid in a first heat exchanger, thereby transferring heat from the hot fluid stream to the first heat transfer fluid and obtaining a heated first heat transfer fluid having a temperature T₁ and a pressure p₁;
c) Subjecting the heated first heat transfer fluid to 2 to 5, preferably 2 to 4, most preferably 2 or 3 compressing steps to obtain a compressed first heat transfer fluid having a pressure p2;
d) Thermally contacting the compressed first heat transfer fluid with an aqueous condensate in a second heat exchanger, thereby transferring heat from the compressed first heat transfer fluid to the aqueous condensate and vaporizing the aqueous condensate to obtain a steam stream;
e) Using the steam stream for energy recovery thereby obtaining a stream comprising an aqueous condensate;
wherein
- the ratio of pressure p₂ to pressure pi, p₂/p₁, is 5 to 50; and
- the steam stream used for energy recovery has temperature Tₛ is in the range of from 120 to 200°C, preferably from 130 to 170°C, more preferably from 135 to 150°C and pressure pₛ is in the range of from 2.0 to 15.5 barg, preferably from 2.7 to 7.9 barg, more preferably from 3.1 to 4.8 barg.

Further, the present invention relates to a facility for recovering energy comprising:
- a first heat exchanger for transferring heat from a hot fluid stream to a first heat transfer fluid to obtain a heated first heat transfer fluid having a temperature T₁ and a pressure p₁;
   - at least one, such as one or two, preferably one heat pump compressor(s), whereby each heat pump compressor comprises 2 to 5, more preferably 2 to 4, most preferably 2 or 3 compression stages connected in series for compressing the heated first heat transfer fluid to obtain a compressed first heat transfer fluid having a pressure p₂;
- a second heat exchanger for transferring heat from the compressed first heat transfer fluid to an aqueous condensate to obtain a steam stream;
- means for using the steam stream for energy recovery thereby obtaining a stream comprising an aqueous condensate;
- means for transporting the heated first heat transfer fluid from the first heat exchanger to the first upstream means for compressing the heated first heat transfer fluid;
- means for transporting the compressed first heat transfer fluid from one upstream compression stage for compressing the heated first heat transfer fluid to the next downstream compression stage for compressing the heated first heattransfer fluid in the series of compression stages for compressing the heated first heat transfer fluid;
- means for transporting the compressed first heat transfer fluid having a pressure p₂ from the last means for compressing the heated first heat transfer fluid in the series to the second heat exchanger; and
- means for transporting the aqueous condensate to the second heat exchanger; and
- means for transporting the steam stream from the second heat exchanger to the means for using the steam stream for energy recovery.

### Brief description of the figures

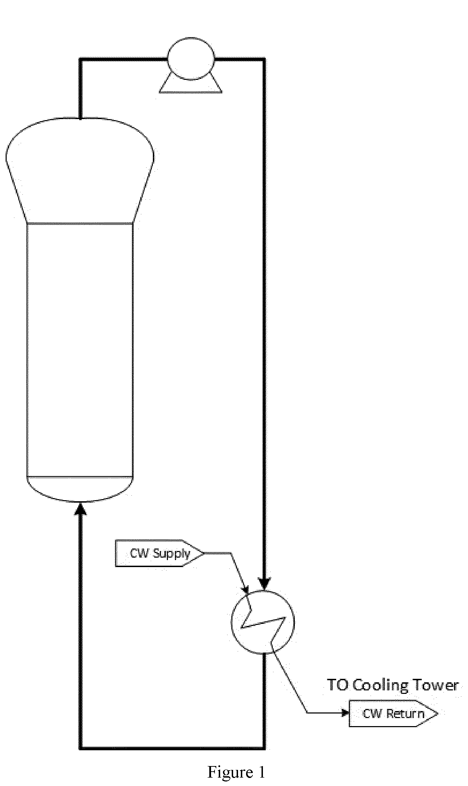

Figure 1 shows a schematic overview of a state of the art polyolefin polymerization stage in a fluidized bed gas phase reactor in which heat is transferred from the circulation gas stream in a single heat exchanging step is wasted.

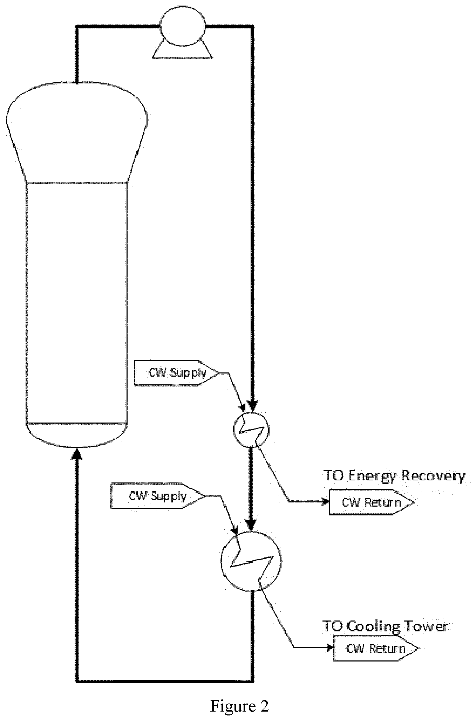

Figure 2 shows a general schematic overview of polyolefin polymerization stage in a fluidized bed gas phase reactor in which heat is transferred from the circulation gas stream in a two sequential heat exchanging steps. The heated cooling fluid from the first heat exchanging step can be used in energy recovery, whereas the residual heat transferred in the second heat exchanging step is wasted.

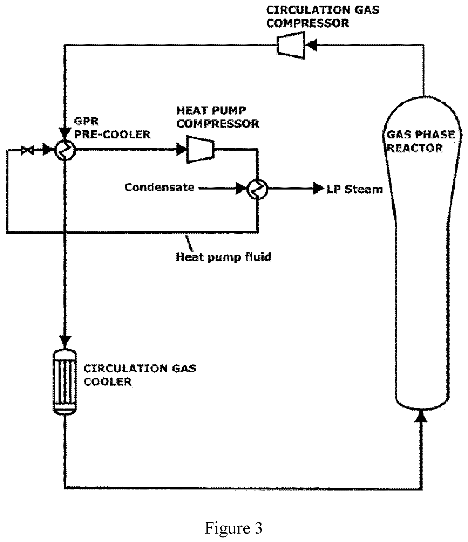

Figure 3 shows a schematic overview of the heat recovery method of the invention applied as an example in a fluidized bed gas phase reactor stage of an olefin polymerization process in which heat is transferred from the circulation gas stream to the first heat transfer fluid in the first heat exchanging step (GPR pre-cooler) and said heated cooling fluid is subjected to a compressor heat pump in which the thermal energy is used for producing a low pressure steam stream.

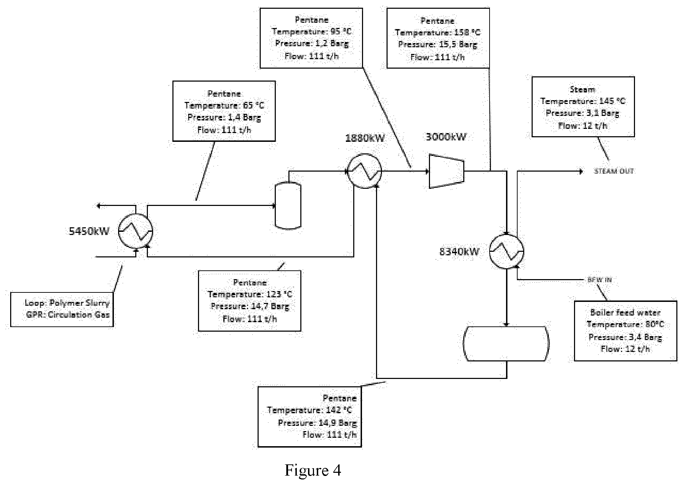

Figure 4 shows a projected example for the embodiment of Figure 3 with n-pentane as first heat transfer fluid. The projected example is further discussed below in the example section.

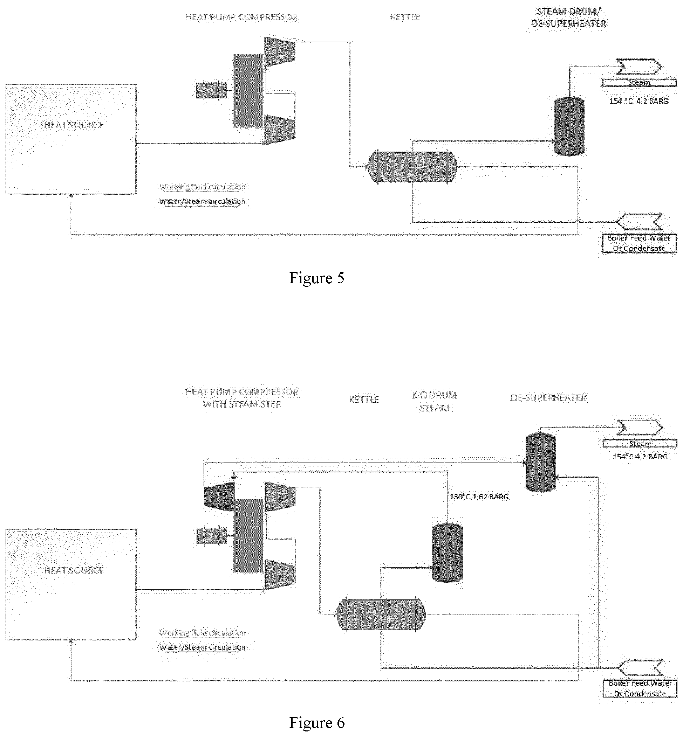

Figure 5 shows a projected example of a further embodiment of the heat recovery method of the invention in which the low pressure steam stream is subjected to a steam drum or de-superheater for producing a steam stream that has a temperature and pressure in the required range for direct use in the polymerization process. The projected example is further discussed below in the example section.
Figure 6 shows a projected example of a further embodiment of the heat recovery method of the invention in which the low pressure steam stream is subjected to a further compressing step in the compressor heat pump for producing a steam stream that has a temperature and pressure in the required range for direct use in the polymerization process. The projected example is further discussed below in the example section.

### Detailed description of the invention

### Method

In a first aspect the present invention relates to a method for recovering energy comprising the steps of:
a) Providing a hot fluid stream;
b) Thermally contacting the hot fluid stream with a first heat transfer fluid in a first heat exchanger, thereby transferring heat from the hot fluid stream to the first heat transfer fluid and obtaining a heated first heat transfer fluid having a temperature T₁ and a pressure p₁;
c) Subjecting the heated first heat transfer fluid to 2 to 5, preferably 2 to 4, most preferably 2 or 3 compressing steps to obtain a compressed first heat transfer fluid having a pressure p₂;
d) Thermally contacting the compressed first heat transfer fluid with an aqueous condensate in a second heat exchanger, thereby transferring heat from the compressed first heat transfer fluid to the aqueous condensate and vaporizing the aqueous condensate to obtain a steam stream;
e) Using the steam stream for energy recovery thereby obtaining a stream comprising an aqueous condensate;
wherein
- the ratio of pressure p₂ to pressure pi, p₂/p₁, is 5 to 50; and
- the steam stream used for energy recovery has temperature Tₛ is in the range of from 120 to 200°C, preferably from 130 to 170°C, more preferably from 135 to 150°C and pressure pₛ is in the range of from 2.0 to 15.5 barg, preferably from 2.7 to 7.9 barg, more preferably from 3.1 to 4.8 barg.

The hot fluid stream preferably has a temperature T_{f} of from 20 to 150°C, more preferably from 25 to 130°C, most preferably from 30 to 110°C.

Thus, the method of the present invention can also be used for recovering energy from fluid streams with moderate temperature. The term "hot" in this connection therefore only means that the temperature T_{f} of the hot fluid stream is higher than the temperature T₀ of the first heat transfer fluid before entering the first heat exchanger so that heat can be exchanged from the hot fluid stream to the first heat transfer fluid.

The hot fluid stream can be provided from any kind of fluid stream of elevated temperature. Sources for the hot fluid stream can be industrial processes or any kind of other circumstances in which waste heat is produced in form of fluid streams of elevated temperature, such as power generation, engines, electronics or housing.

In one preferred embodiment the hot fluid stream is provided from an industrial process, more preferably from a chemical production process.

The chemical production process can be any process for producing a chemical product, in which heat can provided from hot fluid streams.

In one specific embodiment the chemical production process is a polymerization process. The polymerization process is preferably a process for polymerizing alpha-olefin polymers. The polymerization process preferably is a low pressure process for polymerizing alpha-olefin polymers in the presence of a polymerization catalyst.

The polymerization catalyst can be any suitable catalyst for polymerizing alpha-olefin polymers, such as a Ziegler-Natta catalyst or a metallocene catalyst in supported or non-supported form.

The alpha-olefin polymer can be a homopolymer or copolymer of ethylene and/or alpha-olefin monomers having from 3 to 12 carbon atoms, such as ethylene, propylene, 1-butene, 1-hexene or 1-octene.

Preferred are ethylene homopolymers or copolymers with one or more comonomers selected from alpha-olefin comonomers having from 3 to 12 carbon atoms, such as propylene, 1-butene, 1-hexene and/or 1-octene and propylene homopolymers or copolymers with one or more comonomers selected ethylene or alpha-olefin comonomers having from 4 to 12 carbon atoms, such as ethylene, 1-butene, 1-hexene and/or 1-octene.

The polymerization process can be a single stage polymerization process or a multistage polymerization process.

In a single stage polymerization process the polymer polymerization is conducted in a single polymerization reactor which can be selected from a slurry phase reactor, such as a loop reactor, and a gas phase reactor, such as a fluidized bed gas phase reactor.

The polymerization process is preferably a multistage polymerization process in which two or more reactors, preferably two to six reactors, such as two, three, four, five or six reactors are connected in series. The two or more reactors are usually selected from slurry phase reactors, such as loop reactors, and gas phase reactors, such as fluidized bed gas phase reactors. Downstream of the reactor stage(s) of the polymerization process the polymer is further processed. In said downstream processing stages the polymer is preferably separated from non-reacted monomer and other components of the production stream. Further, the polymer is preferably compounded in an extruder with applicable additives as known in the art.

Typical multistage polymerization processes in which the method of the invention is applicable are amongst others, e.g. Borstar^{®} PE and Borstar^{®} PP from Borealis AG or Spheripol^{™} from LyondellBasell.

The hot fluid stream can be provided from any process stage of the chemical production process, such as one or more or all production stages, in which the chemical product or any precursors or intermediates are produced, and/or the processing stages downstream from the production stage(s), such as the purification stage or the compounding stage.

It is especially preferred that the hot fluid stream is not a cooling stream from a heat exchange step.

Instead it is preferred that the hot fluid stream is a stream which is directly obtained without indirect heat exchange or energy transfer.

The hot fluid stream can be a slurry stream, a liquid stream or a gaseous stream.

When being a slurry stream or a liquid stream, the hot fluid stream preferably has a temperature T_{f} in the range of from 20 to 150°C, more preferably from 25 to 130°C, most preferably from 30 to 110°C.

When being a gaseous stream, the hot fluid stream preferably has a temperature T_{f} in the range of from 50 to 150°C, preferably from 55 to 130°C, most preferably from 65 to 110°C and a pressure in the range of from 5 to 50 bar, preferably from 8 to 40 bar, most preferably from 10 to 35 bar.

In the embodiment of a chemical production process the hot fluid stream is preferably a hot product stream.

In the embodiment of a polymerization process as described above the hot product stream is preferably selected from the hot polymer slurry stream of a slurry phase polymerization stage, the hot circulation gas stream from a gas phase polymerization stage or the hot polymer stream from processing stages downstream from the polymerization stage(s), such as from the extrusion stage.

The hot fluid stream can also be the primary water circuit of extruder in the processing stages downstream from the polymerization stage(s), such as from the extrusion stage.

The hot fluid stream provided from a polymerization process preferably comprises monomer, optionally comonomer, both as defined above, and optionally chain transfer agent, such as hydrogen.

When being the hot polymer slurry stream of a slurry phase polymerization stage or the hot polymer stream from processing stages downstream from the polymerization stage(s) the hot fluid stream preferably comprises polymer.

The hot fluid stream is preferably directly transported to the first heat exchanger. Thereby, "directly" means that the hot fluid stream is not subjected to any further treatment as to manipulate the temperature of the hot fluid stream.

In the first heat exchanger the hot fluid stream is thermally contacted with a first heat transfer fluid. Thereby heat is transferred from the hot fluid stream to the first heat transfer fluid and a heated first heat transfer fluid having a temperature T₁ is obtained.

The first heat transfer fluid is preferably selected from refrigerants.

The refrigerants are preferably selected from hydrocarbons, such as propane, isobutene, n-butane, cyclopropane, ethane, n-pentane, isopentane, cyclopentane or mixtures thereof, halogenated hydrocarbons like hydrochlorocarbons, hydrochlorofluorocarbons, hydrofluorocarbons or mixtures thereof, such as methyl chloride dichloromethane monofluorodichloromethane, monochlorodifluoromethane, trichlorotrifluoroethane, 1,2-dichlorotetrafluoroethane, 2,2-dichloro-1,1,1-trifluoroethane, 1,1-difluoromethane or mixtures thereof, natural refrigerants such as ammonia, carbon dioxide or sulphur dioxide, or nanofluids.

Especially preferred refrigerants are hydrocarbons, such as propane, isobutene, n-butane, cyclopropane, ethane, n-pentane, isopentane, cyclopentane or mixtures thereof, preferably isobutene, n-butane, n-pentane, isopentane, cyclopentane or mixtures thereof, more preferably n-pentane, isopentane or cyclopentane.

It is preferred that the first heat transfer fluid is only used as used in a closed energy recovery cycle in which the first heat transfer fluid sate is used as heating and cooling medium.

Before being subjected to the heat transfer step b) the first heat transfer fluid preferably is liquid.

Before being subjected to the heat transfer step b) the first heat transfer fluid preferably has a temperature T₀ in the range of from 15 to 75°C, more preferably from 20 to 72°C, most preferably from 25 to 70°C.

After heat transfer the cooled fluid stream has a temperature T_{f1}. T_{f1} of the cooled fluid stream is lower than the temperature T_{f} of the hot fluid stream. T_{f1} of the cooled fluid stream can be in the range of from 15 to 145°C, more preferably 20 to 125°C, still more preferably 25 to 98°C.

In the embodiment of the chemical production process it has been found that a more efficient heat transfer from the hot fluid stream to the first heat transfer fluid can be achieved if the hot fluid stream is subjected to two subsequent heat exchanging steps in two heat exchangers connected in series.

Thereby, heat transfer step b) is preferably conducted in the upstream heat exchanger of the two heat exchangers connected in series.

The residual heat of the cooled fluid stream withdrawn from said upstream heat exchanger can then be transferred to a further heat transfer fluid in the downstream heat exchanger of the two heat exchangers connected in series.

Usually the temperature of the heated further heat transfer fluid is too low for further using the heated further heat transfer fluid in energy recovery. The heated further heat transfer fluid is therefore removed, e.g. in a storage means such as a cooling tower.

The further heat transfer fluid can be a refrigerant as described above for the first heat transfer fluid or water.

The heated first heat transfer fluid is used for energy recovery.

After the heat transfer in method step b) the heated first heat transfer fluid preferably has a T₁ is in the range of from 30 to 80°C, preferably from 40 to 75°C, more preferably from 50 to 70°C.

The pressure pi of the heated first heat transfer fluid after the heat transfer in method step b) is preferably in the range of from 0.5 to 2.0 barg, preferably from 0.7 to 1.8 barg, more preferably from 1.0 to 1.5 barg.

It is preferred that in heat transfer step b) the first heat transfer fluid is vaporized to obtain a vaporized heated first heat transfer fluid having a temperature T₁ and a pressure p₁.

A phase transfer from liquid to gas is preferred as a more efficient energy transfer due to the evaporation enthalpy from the hot fluid stream to the first heat transfer fluid is obtained.

For direct use e.g. as heat source or for producing a steam stream the temperature T₁ and the pressure p₁ of the heated first heat transfer fluid usually are too low so that no efficient energy recovery is possible.

Consequently, in the inventive method the pressure of the heated first heat transfer fluid is increased to pressure p₂.

Thus, in a subsequent method step c) the heated first heat transfer fluid is subjected to 2 to 5, preferably 2 to 4, most preferably 2 or 3 compressing steps to obtain a compressed first heat transfer fluid having a pressure p₂.

For the compressing steps preferably at least one, such as one or two, preferably one heat pump compressor(s) are used. Each heat pump compressor preferably comprises 2 to 5, more preferably 2 to 4, most preferably 2 or 3 compression stages connected in series. The at least one heat pump compressor(s) is/are preferably part of a heat pump as known in the art.

The compressing steps are preferably arranged subsequently, preferably by using one or more heat pump compressors in which 2 to 5, more preferably 2 to 4, most preferably 2 or 3 compression stages are arranged subsequently.

In a subsequent arrangement the heated first heat transfer fluid is firstly subjected to a first compressing step, preferably in a first upstream compression stage of a heat pump compressor, whereby the pressure of the heated first heat transfer fluid is increased by a first increment in a first step. The heated first heat transfer fluid compressed in said first step is then subjected to the next downstream compressing step, preferably in a second compression stage of the heat pump compressor, which is situated downstream from the first upstream compression stage of the heat pump exchanger, whereby the pressure of the heated first heat transfer fluid is increased by a second increment in a second step. This is optionally repeated until in the last downstream heat exchanging step, preferably in the last downstream compression stage of the heat pump compressor, the compressed first heat transfer fluid having a pressure p₂ is obtained.

During the 2 to 5, preferably 2 to 4, most preferably 2 or 3 compressing steps as discussed above the temperature of the heated first heat transfer fluid is preferably increased to the temperature T₂.

In the case that more than one compressing steps are used the temperature of the heated first heat transfer fluid usually is increased in increments during each compressing steps parallel to the increments of the pressure increase as discussed above.

The increments of temperature and pressure increase in the subsequent compressing steps usually depend on the volume stream of the heated first heat transfer fluid and the dimensions and the power of each heat pump compressor.

It is preferred that the increment of pressure increase, determined as ratio of pₒᵤₜ/pᵢₙ in each compressing step is independently in the range of from 1.3 to 3, preferably from 1.5 to 2.5. Preferably the increment of temperature increase in each compressing step is independently in the range of from 25 to 250 K, preferably from 50 to 200 K.

In some embodiments the temperature increase in a compressing step can result in a temperature of the compressed first heat transfer fluid of about 300°C. A temperature above 300°C is undesirable due to possible material weakness or even failure of the affected pipes, armatures and fittings.

It is therefore preferred that the temperature of the compressed first heat transfer fluid after one or more, preferably after each compressing step is reduced so that the temperature of the compressed first heat transfer fluid does not exceed 300°C.

The temperature of the compressed first heat transfer fluid can be reduced after one or more, preferably after each heating and compressing step by combining the compressed heated first heat transfer fluid stream with a liquid first heat transfer fluid of higher pressure.

The compressed first heat transfer fluid is preferably combined with a liquid first heat transfer fluid of higher pressure in a de-superheater.

The amount of compressing steps is preferably projected by considering the expected pressure increase increments of each compressing step in order to obtain a compressed first heat transfer fluid having a pressure p₂.

The pressure increase in the 2 to 5, preferably 2 to 4, most preferably 2 to 3 compressing step(s) is as such that the ratio of pressure p₂ to pressure pi, p₂/p₁, is 5 to 50, preferably 10 to 40, most preferably 15 to 30.

The pressure p₂ is preferably in the range of from 10.0 to 20.0 barg, more preferably from 12.0 to 18.0 barg, still more preferably from 14.0 to 16.0 barg.

The compressed first heat transfer fluid having the pressure p₂ preferably has a temperature T₂.

The temperature T₂ is preferably 50 K to 250 K, more preferably 65 K to 150 K, most preferably 75 K to 125 K higher than the temperature T₁.

The compressed first heat transfer fluid having a pressure p₂ is used for energy recovery. Since the first heat transfer fluid is usually a refrigerant as described above, the compressed first heat transfer fluid having a pressure p₂ is usually not suitable for direct use in energy recovery.

The method of the present invention therefore suggests a second heat transfer step d) in which the compressed first heat transfer fluid is thermally contacted with an aqueous condensate in a second heat exchanger, thereby transferring heat from the compressed first heat transfer fluid to the aqueous condensate and vaporizing the aqueous condensate to obtain a steam stream.

In a preferred embodiment the compressed first heat transfer fluid is gaseous as discussed above.

In the second heat exchanger the compressed first heat transfer fluid can be liquefied.

By liquefying the compressed first heat transfer fluid in the heat exchange step d) in the second heat exchanger a more efficient heat transfer from the compressed first heat transfer fluid to the aqueous condensate is obtained.

The first heat transfer fluid withdrawn from the second heat exchanger can also be gaseous.

Preferably the first heat transfer fluid withdrawn from the second heat exchanger in step d) is redirected to the first heat exchanger and is used as first heat transfer fluid in step b).

Thereby, the first heat transfer fluid withdrawn from the second heat exchanger in step d) can be used as a heating medium in further optional heat transfer steps such as an optional heat transfer step before or during the compression step c).

Thereby, a gaseous first heat transfer fluid withdrawn from the second heat exchanger can be liquefied in further optional heat transfer steps.

The first heat transfer fluid withdrawn from the second heat exchanger in step d) can be used as a liquid first heat transfer fluid of higher pressure in a de-superheater as discussed above.

In one embodiment sufficient energy is transferred from the compressed first heat transfer fluid to the steam stream withdrawn from the second heat exchanger in step d) so that the steam stream withdrawn from the second heat exchanger has a temperature Tₛ is in the range of from 120 to 200°C, preferably from 130 to 170°C, more preferably from 135 to 150°C and a pressure pₛ is in the range of from 2.0 to 15.5 barg, preferably from 2.7 to 7.9 barg, more preferably from 3.1 to 4.8 barg. Said steam stream can be directly used for energy recovery.

In another embodiment the stream withdrawn from the second heat exchanger has a temperature and/or pressure lower than Tₛ and/or pₛ so that said steam stream can only insufficiently be used for energy recovery.

In said embodiment the steam stream withdrawn from the second heat exchanger is preferably compressed in at 2 to 5, preferably 2 to 4, most preferably 2 or 3 compressing step(s) to obtain a compressed steam stream having the temperature Tₛ and the pressure pₛ.

For the compressing steps preferably at least one, such as one or two, preferably one heat pump compressor(s) are used. Each heat pump compressor preferably comprises 2 to 5, preferably 2 to 4, most preferably 2 or 3 compression stages connected in series. The at least one heat pump compressor(s) is/are preferably part of a heat pump as known in the art.

It is especially preferred that the compressing step(s) for compressing the steam stream to a temperature Tₛ and a pressure pₛ are conducted in compression stages of the at least one, such as one or two, preferably one heat pump compressor(s) which are used for the at least one, such as 1 to 5, preferably 2 to 4, most preferably 2 or 3 compressing step(s) of method step c).

The steam stream having a temperature Tₛ and pressure pₛ is used for energy recovery.

One suitable means of energy recovery is using the steam stream as heating medium.

At a production facility the steam stream can be used as heating medium for heating e.g. a product stream, any other stream, a part of the production site components at any stage of the industrial process or even in the heating system of the production facility.

In a polymerization process preferably as discussed above the compressed steam stream can be used for replacing steam in the reboilers in the steps for recovering monomers, comonomers and other reactants of the polymerization process or for heating the flash tank in the gas phase polymerization stages.

A suitable method for thermal energy storage is e.g. a method using reversal condensation reactions, such as the chemical heat pump, which has been commercialized by Qpinch and is described e.g., amongst others, in WO 2014/016405 A1.

A suitable method for producing electricity has been commercialized by Climeon and is described e.g., amongst others, in EP 2 689 111 A1.

Spare compressed steam stream which is not used for energy recovery e.g. within an industrial process can also be used has heating medium or other forms of energy recovery, which is/are outside the industrial process.

By using the steam stream having a temperature Tₛ and pressure pₛ for energy recovery the temperature and pressure of the heated and compressed steam stream is reduced to such an extent that the steam stream at least partially condensates and a stream comprising an aqueous condensate is obtained.

In the stream comprising an aqueous condensate is preferably at least partly liquid such as at least 60 wt% liquid, preferably at least 75 wt% liquid, most preferably at least 90 wt% liquid after being used for energy recovery. The non liquid part of the aqueous condensate thereby is gaseous, i.e. up to 40 wt%, preferably up to 25 wt%, most preferably up to 10 wt%. In some embodiments the aqueous condensate is 100 wt% liquid upon the temperature and pressure conditions after energy recovery.

It is preferred that the stream comprising an aqueous condensate obtained from the steam stream having a temperature Tₛ and pressure pₛ used for heat recovery is subjected to a vapour separation step to obtain a second steam stream and an aqueous condensate.

The aqueous condensate can be used in the second heat exchanger for transferring heat from the compressed first heat transfer fluid to the aqueous condensate and vaporizing at least part of the aqueous condensate to obtain a steam stream.

The second steam stream can be combined with the steam stream, preferably during the compressing step(s) to obtain a steam stream having a temperature Tₛ and pressure pₛ.

The aqueous condensate is preferably liquid water such as service water. It is preferred that the aqueous condensate is only used as used in a closed energy recovery cycle in which the aqueous condensate is used as heating and cooling medium and for producing electrical energy.

It is preferred that the aqueous condensate is not separated from a product stream of an industrial production process or introduced into a product stream of an industrial production process.

### Production facility

In a further aspect the present invention relates to a facility for recovering energy comprising:
- a first heat exchanger for transferring heat from a hot fluid stream to a first heat transfer fluid to obtain a heated first heat transfer fluid having a temperature T₁ and a pressure p₁;
- at least one, such as one or two, preferably one heat pump compressor(s), whereby each heat pump compressor comprises 2 to 5, more preferably 2 to 4, most preferably 2 or 3 compression stages connected in series for compressing the heated first heat transfer fluid to obtain a compressed first heat transfer fluid having a pressure p₂;
- a second heat exchanger for transferring heat from the compressed first heat transfer fluid to an aqueous condensate to obtain a steam stream;
- means for using the steam stream for energy recovery thereby obtaining a stream comprising an aqueous condensate;
- means for transporting the heated first heat transfer fluid from the first heat exchanger to the first upstream means for compressing the heated first heat transfer fluid;
- means for transporting the compressed first heat transfer fluid from one upstream compression stage for compressing the heated first heat transfer fluid to the next downstream compression stage for compressing the heated first heat transfer fluid in the series of compression stages for compressing the heated first heat transfer fluid;
- means for transporting the compressed first heat transfer fluid having a pressure p₂ from the last means for compressing the heated first heat transfer fluid in the series to the second heat exchanger; and
- means for transporting the aqueous condensate to the second heat exchanger; and
- means for transporting the steam stream from the second heat exchanger to the means for using the steam stream for energy recovery.

The facility can be any kind of facility in which hot fluid streams occur and can be used for energy recovery. Non limiting examples are e.g. industrial production sites such as chemical production sites, especially polymerization production sites, power generation facilities, facilities containing engines or electronics or housing.

The facility is preferably adapted for all aspects and embodiments of the inventive method for recovering steam as described above or below.

In the case of a chemical production site, the facility preferably further comprises means for producing a chemical product, such as one or more reactor(s).

Further, the facility preferably comprises means for post-production processing of the chemical product such as means for purifying the chemical product and/or means for compounding the chemical product or other means needed for processing and finishing the chemical product.

Still further, the facility preferably comprises means for transporting educts, products and/or other components used in the chemical production process to the means for producing a chemical product and from the means for producing a chemical product to the means for post-production processing of the chemical product and each means for process steps inbetween.

In a polymerization production site the means for producing a chemical product preferably comprise a polymerization reactor.

The polymerization reactor can be a single polymerization reactor or multiple polymerization reactors connected in series.

The single polymerization reactor can be selected from a slurry phase reactor, such as a loop reactor, and a gas phase reactor, such as a fluidized bed gas phase reactor.

The multiple polymerization reactors are preferably two or more polymerization reactors, preferably two to six polymerization reactors, such as two, three, four, five or six polymerization reactors are connected in series.

The multiple polymerization reactors are usually selected from slurry phase reactors, such as loop reactors, and gas phase reactors, such as fluidized bed gas phase reactors.

The means for processing the polymer powder downstream from the at least one polymerization reactor preferably include means for separating the polymer from the unreacted monomers, comonomers and other components of the product stream.

Further, the means for processing the polymer powder downstream from the at least one polymerization reactor preferably include means for compounding the polymer, such as an extruder.

The facility comprises at least one first heat exchanger.

The facility can comprise more than one first heat exchanger, such as at least one set of at least two first heat exchangers connected in series.

The number of sets of at least two first heat exchangers connected in series can be from 1 to 10, such as 1, 2, 3, 4, 5 or 6.

A set of at least two first heat exchangers connected in series can contain 2 or more, such as 2 to 6, preferably 2, 3 or 4, most preferably 2 heat exchangers connected in series.

In a polymerization production site the number of sets of at least two first heat exchangers connected in series usually depends on the number of polymerization reactors and the number of means for processing the polymer powder downstream from the at least one polymerization reactor.

One set of at least two first heat exchangers connected in series can be connected to each polymerization reactor of the production facility and/or the means for processing the polymer powder downstream from the at least one polymerization reactor, preferably the means for compounding the polymer, such as an extruder.

The facility comprises one or more, preferably 1 to 5, more preferably 2 to 4, most preferably 2 or 3 means for compressing the heated first heat transfer fluid to obtain a compressed first heat transfer fluid having a pressure p₂.

The one or more means for compressing the heated first heat transfer fluid are preferably connected in series.

It is preferred that the one or more means for compressing the heated first heat transfer fluid are one or more, such as one or two, preferably one heat pump compressor(s).

Each heat pump compressor preferably comprises 2 to 5, more preferably 2 to 4, most preferably 2 or 3 compression stages connected in series.

The one or more, such as one or two, preferably one heat pump compressor(s) are preferably part of one or more heat pumps as known in the art.

The facility further comprises a second heat exchanger for transferring heat from the compressed first heat transfer fluid to an aqueous condensate to obtain a steam stream.

Still further, the facility comprises means for using the steam stream for energy recovery.

Said means for using the steam stream for energy recovery can be means for using the steam stream as heating medium.

In an industrial production site the means for using the steam stream as heating medium can be means for heating e.g. a product stream, any other stream, a part of the production site components at any stage of the industrial production process or even in the heating system of the production site. Such means can be heat exchangers, reboilers or the heating system.

The means for energy recovery can be means for temporary storing a high temperature and/or pressure stream before use.

The means for using the steam stream for energy recovery can also be means for thermal energy storage, e.g. means for applying a method using reversal condensation reactions, such as the chemical heat pump, which has been commercialized by Qpinch and is described e.g., amongst others, in WO 2014/016405 A1.

The means for transporting the heated first heat transfer fluid from the first heat exchanger to the first upstream means for compressing the heated first heat transfer fluid are preferably pipes for connecting the first heat exchanger with the first means for compressing the heated first heat transfer fluid.

In one embodiment the first heat exchanger is directly connected to the first means for compressing the heated first heat transfer fluid by the means for transporting the heated first heat transfer fluid from the first heat exchanger to the first means for compressing the heated first heat transfer fluid. "Directly connected" thereby means that the means are not connected to any further means for manipulating the temperature or pressure of the heated first heat transfer fluid.

In another embodiment the first heat exchanger is not directly connected to the first means for compressing the heated first heat transfer fluid by the means for transporting the heated first heat transfer fluid from the first heat exchanger to the first means for compressing the heated first heat transfer fluid. In said embodiment the means for transporting the heated first heat transfer fluid from the first heat exchanger to the first upstream means for compressing the heated first heat transfer fluid passes means for manipulating the temperature or pressure of the heated first heat transfer fluid, such as a further heat exchanger.

Said heat exchanger can be used for preheating the heated first heat transfer fluid before being introduced into first means for compressing the heated first heat transfer fluid.

In the case that more than one means for compressing the heated first heat transfer fluid are connected in series, the facility comprises means for transporting the heated first heat transfer fluid from one upstream means for compressing the heated first heat transfer fluid to the next downstream means for compressing the heated first heat transfer fluid in the series of means for compressing the heated first heat transfer fluid.

Preferably the means for transporting the heated first heat transfer fluid from one upstream means for compressing the heated first heat transfer fluid to the next downstream means for compressing the heated first heat transfer fluid are preferably pipes for connecting one upstream means for compressing the heated first heat transfer fluid to the next downstream means for compressing the heated first heat transfer fluid.

Preferably in the series of means for compressing the heated first heat transfer fluid each upstream means for compressing the heated first heat transfer fluid is connected to the next downstream means for compressing the heated first heat transfer fluid via the means for transporting the heated first heat transfer fluid from one upstream means for compressing the heated first heat transfer fluid to the next downstream means for compressing the heated first heat transfer fluid.

The upstream and the next downstream means for compressing the heated first heat transfer fluid can be connected directly via the means for transporting the heated first heat transfer fluid from one upstream means for compressing the heated first heat transfer fluid to the next downstream means for compressing the heated first heat transfer fluid. "Directly connected" thereby means that the means are not connected to any further means for manipulating the temperature or pressure of the heated first heat transfer fluid.

In one embodiment the facility further comprises means for cooling the heated first heat transfer fluid downstream of at least one, preferably each means for compressing the heated first heat transfer fluid.

Said means for cooling the heated first heat transfer fluid downstream of at least one, preferably each means for compressing the heated first heat transfer fluid are preferably means for combining the heated first heat transfer fluid with a liquid first heat transfer fluid of higher pressure.

Suitable means for cooling the heated first heat transfer fluid downstream of at least one, preferably each means for compressing the heated first heat transfer fluid is most preferably a de-superheater as known in the art.

The facility also comprises means for transporting the compressed first heat transfer fluid having a pressure p₂ from the last means for compressing the heated first heat transfer fluid in the series to the second heat exchanger.

The means for transporting the compressed first heat transfer fluid having a pressure p₂ from the last means for compressing the heated first heat transfer fluid in the series to the second heat exchanger are preferably pipes for connecting the last means for compressing the heated first heat transfer fluid in the series with the second heat exchanger.

The last means for compressing the heated first heat transfer fluid in the series is preferably directly connected to the second heat exchanger by the means for transporting the compressed first heat transfer fluid having a pressure p₂ from the last means for compressing the heated first heat transfer fluid in the series to the second heat exchanger. "Directly connected" thereby means that the means are not connected to any further means for manipulating the temperature or pressure of the compressed first heat transfer fluid.

The facility also comprises means for transporting the aqueous condensate to the second heat exchanger.

The means for transporting the aqueous condensate to the second heat exchanger are preferably pipes for connecting a storing device for storing the aqueous condensate with the second heat exchanger.

It is preferred that the means for transporting the aqueous condensate to the second heat exchanger are means for transporting the aqueous condensate from the means for using the steam stream to the second heat exchanger.

Still further, the facility comprises means for transporting the steam stream from the second heat exchanger to the means for using the steam stream for energy recovery.

The means for transporting the steam stream from the second heat exchanger to the means for using the steam stream for energy recovery are preferably pipes for connecting the second heat exchanger with the means for using the steam stream for energy recovery.

In one embodiment the second heat exchanger is directly connected to the means for using the steam stream for energy recovery by the means for transporting the steam stream from the second heat exchanger to the means for using the steam stream for energy recovery. "Directly connected" thereby means that the means are not connected to any further means for manipulating the temperature or pressure of the steam stream.

In another embodiment the second heat exchanger is not directly connected to the means for using the steam stream for energy recovery by the means for transporting the steam stream from the second heat exchanger to the means for using the steam stream for energy recovery. In said embodiment the facility preferably further comprises
- one or more, preferably 1 to 5, more preferably 2 to 4, most preferably 2 or 3 means for compressing the steam stream, wherein 2 to 5, preferably 2 to 3, most preferably 2 means for compressing the steam stream are connected in series, to obtain a steam stream having a temperature Tₛ and a pressure pₛ, preferably at least one, such as one or two, preferably one heat pump compressor(s), whereby each heat pump compressor comprises one or more, preferably 1 to 5, more preferably 2 to 4, most preferably 2 or 3 compression stages, wherein 2 to 5, preferably 2 to 3, most preferably 2 compression stages are, connected in series;
- means for transporting the steam stream from the second heat exchanger to the first upstream means for compressing the steam stream;
- optionally means for transporting the steam stream from one upstream means for compressing the steam stream to the next downstream means for compressing the steam stream in the series of means for compressing the steam stream; and
- means for transporting the steam stream having a temperature Tₛ and a pressure pₛ from the last means for compressing the steam stream in the series to the means for using the steam stream for energy recovery.

Thereby, the 2 to 5, more preferably 2 to 4, most preferably 2 or 3 compression stages connected in series for compressing the heated first heat transfer fluid having a temperature T₁ and a pressure p₁ to obtain a compressed first heat transfer fluid having a pressure p₂ and the one or more, preferably 1 to 5, more preferably 2 to 4, most preferably 2 or 3 means for compressing the steam stream, wherein 2 to 5, preferably 2 to 3, most preferably 2 means for compressing the steam stream are connected in series, to obtain a steam stream having a temperature Tₛ and a pressure pₛ are preferably compression stages of the same heat pump compressor.

The means for transporting the steam stream from the second heat exchanger to the first upstream means for compressing the steam stream are preferably pipes for connecting the second heat exchanger with the first upstream means for compressing the steam stream by the means for transporting the steam stream from the second heat exchanger to the first upstream means for compressing the steam stream. The second heat exchanger is preferably directly connected with the first upstream means for compressing the steam stream by the means for transporting the steam stream from the second heat exchanger to the first upstream means for compressing the steam stream. "Directly connected" thereby means that the means are not connected to any further means for manipulating the temperature or pressure of the steam stream.

In the case that more than one means for compressing the steam stream are connected in series, the facility comprises means for transporting the steam stream from one upstream means for compressing the steam stream to the next downstream means for compressing the steam stream in the series of means for compressing the steam stream.

Preferably the means for transporting the steam stream from one upstream means for compressing the steam stream to the next downstream means for compressing the steam stream are preferably pipes for connecting one upstream means for compressing the steam stream to the next downstream means for compressing the steam stream.

Preferably in the series of means for compressing the steam stream each upstream means for compressing the steam stream is connected to the next downstream means for compressing the steam stream via the means for transporting the steam stream from one upstream means for compressing steam stream to the next downstream means for compressing the steam stream.

The upstream and the next downstream means for compressing the steam stream can be connected directly via the means for transporting the steam stream from one upstream means for compressing the steam stream to the next downstream means for compressing the steam stream. "Directly connected" thereby means that the means are not connected to any further means for manipulating the temperature or pressure of the steam stream.

The means for transporting the steam stream having a temperature Tₛ and a pressure pₛ from the last means for compressing the steam stream in the series to the means for using the steam stream for energy recovery are preferably pipes for connecting the last means for compressing the steam stream in the series with the means for using the steam stream for energy recovery. The last means for compressing the steam stream in the series are preferably directly connected with the means for using the steam stream for energy recovery by the means for transporting the steam stream having a temperature Tₛ and a pressure pₛ from the last means for compressing the steam stream in the series to the means for using the steam stream for energy recovery. "Directly connected" thereby means that the means are not connected to any further means for manipulating the temperature or pressure of the steam stream.

It is preferred that the facility further comprises means for transporting the first heat transfer fluid from the second heat exchanger to the first heat exchanger. The means for transporting the first heat transfer fluid from the second heat exchanger to the first heat exchanger are preferably pipes for connecting the second heat exchanger with the first heat exchanger.

In one embodiment the second heat exchanger is directly connected to the first heat exchanger by the means for transporting the first heat transfer fluid from the second heat exchanger to the first heat exchanger. "Directly connected" thereby means that the means are not connected to any further means for manipulating the temperature or pressure of the first heat transfer fluid.

In another embodiment the second heat exchanger is not directly connected to the first heat exchanger by the means for transporting the first heat transfer fluid from the second heat exchanger to the first heat exchanger.

In said embodiment the means for transporting the first heat transfer fluid from the second heat exchanger to the first heat exchanger passes means for manipulating the temperature or pressure of the first heat transfer fluid, such as a heat exchanger or the de-superheater as discussed above.

It is preferred that the facility further comprises
- means for separating a second steam stream and an aqueous condensate from the stream comprising an aqueous condensate obtained from the means for using the steam stream;
- means for transporting the stream comprising an aqueous condensate from the means for using the steam stream to the means for separating a second steam stream and an aqueous condensate from the stream comprising an aqueous condensate; and
- means for transporting the second steam stream from the means for separating a second steam stream and an aqueous condensate to the one or more, preferably 1 to 5, more preferably 2 to 4, most preferably 2 or 3 means for compressing the steam stream to obtain a steam stream having a temperature Tₛ and a pressure pₛ connected in series.

The means for separating a second steam stream and an aqueous condensate from the stream comprising an aqueous condensate obtained from the means for using the steam stream can be any means suitable for separating a liquid stream from a gaseous stream, such as e.g. a vapour-liquid separator as known in the art.

The means for transporting the stream comprising an aqueous condensate from the means for using the steam stream to the means for separating a second steam stream and an aqueous condensate from the stream comprising an aqueous condensate are preferably pipes for connecting, preferably directly connecting the means for using the steam stream for energy recovery to the means for separating a second steam stream and an aqueous condensate from the stream comprising an aqueous condensate. "Directly connecting" thereby means that the means are not connected to any further means for manipulating the temperature or pressure of the stream comprising an aqueous condensate.

The means for transporting the second steam stream from the means for separating a second steam stream and an aqueous condensate to the one or more, preferably 1 to 5, more preferably 2 to 4, most preferably 2 or 3 means for compressing the steam stream to obtain a steam stream having a temperature Tₛ and a pressure pₛ connected in series are preferably pipes for connecting, preferably directly connecting the means for separating a second steam stream and an aqueous condensate to the one or more, preferably 1 to 5, more preferably 2 to 4, most preferably 2 or 3 means for compressing the steam stream to obtain a steam stream having a temperature Tₛ and a pressure pₛ connected in series. "Directly connecting" thereby means that the means are not connected to any further means for manipulating the temperature or pressure of the second steam stream.

The production facility preferably further comprises means for transporting the stream comprising an aqueous condensate from the means for using the steam stream to the second heat exchanger.

The means for transporting the stream comprising an aqueous condensate from the means for using the steam stream to the second heat exchanger are preferably the means for transporting the aqueous condensate to the second heat exchanger.

The means for transporting the stream comprising an aqueous condensate from the means for using the steam stream to the second heat exchanger are preferably pipes for connecting the means for using the steam stream to the second heat exchanger.

In one embodiment the second heat exchanger is directly connected to the means for using the steam stream by the means for transporting the stream comprising an aqueous condensate from the means for using the steam stream to the second heat exchanger. "Directly connecting" thereby means that the means are not connected to any further means for manipulating the temperature or pressure of the stream comprising an aqueous condensate.

In another embodiment the second heat exchanger is connected, preferably directly connected to the means for separating a second steam stream and an aqueous condensate from the stream comprising an aqueous condensate by the means for transporting the stream comprising an aqueous condensate from the means for separating a second steam stream and an aqueous condensate from the stream comprising an aqueous condensate to the second heat exchanger. "Directly connecting" thereby means that the means are not connected to any further means for manipulating the temperature or pressure of the stream comprising an aqueous condensate.

### Detailed description of the figures and projected examples

Figure 1 shows a schematic overview of a state of the art polyolefin polymerization stage in a fluidized bed gas phase reactor.

The hot circulation gas stream comprising unreacted monomers and optionally comonomers and chain transfer agent is removed from the upper part of the fluidized gas bed reactor and recirculated back to the lower part of the fluidized bed reactor by means of a pump. The hot circulation gas stream thereby is transferred though a single heat exchanger in which the heat of the hot circulation gas stream is transferred to a cooling water. The temperature and pressure of the heated cooling water is too low for energy storage so that the heated cooling water is directed to a cooling tower.

Figure 2 shows a general schematic overview of a polyolefin polymerization stage in a fluidized bed gas phase reactor in which heat is transferred from the circulation gas stream in a two sequential heat exchanging steps. The heated cooling water from the first heat exchanging step in the upstream heat exchanger has a temperature and pressure which is in the range so that can be used in the inventive method for energy recovery. The temperature and pressure of the heated cooling water from the second heat exchanging step in the downstream heat exchanger is too low for energy storage so that the heated cooling water is directed to a cooling tower.

Figure 3 shows a schematic overview of an embodiment of the inventive method in an example of an olefin polymerization stage in a fluidized bed gas phase reactor in which is heat transferred from the circulation gas stream, which is which withdrawn from the upper part of the fluidized bed gas phase reactor, to the first cooling fluid in the first heat exchanging step (GPR pre-cooler). The circulation gas is then directed to a second heat exchanging step (circulation gas cooler) in which the residual heat of the circulation gas is transferred to a second cooling medium (not shown). The cooled circulation gas is then redirected into the lower part of the fluidized bed gas phase reactor. In some embodiments the first cooling medium is preferably heated in the GPR pre-cooler as such that the first cooling medium performs a phase transfer from liquid phase to gas phase. The heated first cooling medium is pressurized in a heat pump compressor and directed to a heat exchanger, where the heat of the pressurized and heated first cooling fluid is transferred to an aqueous condensate. Thereby, said aqueous condensate is vaporized to produce low pressure steam, which then can be used for energy recovery. The first cooling medium, which has been cooled down in said heat exchanging step is then expanded when passing a valve and redirected as first cooling medium to the GPR pre-cooler.

Figure 4 shows a projected example for the embodiment of Figure 3. The example has been projected with ASPEN Plus.

In a first heat exchanger (left side) a hot fluid stream such as a polymer slurry from a loop reactor or a circulation gas stream from a gas phase reactor is cooled. The hot fluid stream is introduced into the first heat exchanger at a flow of 1400 t/h and has a pressure of 21 barg. The first cooling medium is n-pentane. The liquid n-pentane stream is introduced into the first heat exchanger with a flow of 111 t/h, a temperature of about 65°C°C and a pressure of about 1.45 barg (not shown). The heated n-pentane stream withdrawn from the first heat exchanger at a flow of 111 t/h performs phase transition from liquid phase to gaseous phase and has a temperature of 65°C and a pressure of 1.4 barg. The electrical power of the first heat exchanger is 5450 kW.

The heated n-pentane gas stream is then transferred through a suction drum and introduced into a pre-heater for further heating the heated n-pentane gas stream to a temperature of 95°C and a pressure of 1.2 barg at a flow of 111 t/h. Heating medium in said preheating step is the cooled n-pentane gas stream, withdrawn from the steam boiler (see below), which is cooled down to a temperature of 123°C and pressure of 14.7 barg before being introduced into the first heat exchanger at a flow of 111 t/h. The heating duty of the pre-heater is 1880 kW.

The heated n-pentane gas stream withdrawn from the pre-heater is then pressurized and further heated in a heat pump compressor to a temperature of 158°C and a pressure of 15.5 barg at a flow of 111 t/h. The electrical power of the heat pump compressor is 3000 kW.

The heated and compressed n-pentane gas stream is introduced to a steam boiler in which heat is transferred from the heated and compressed n-pentane gas stream onto an aqueous condensate stream. Before being introduced into the steam boiler the aqueous condensate can be preheated, e.g. with hot n-pentane liquid stream (not shown) for improving energy efficiency. The aqueous condensate stream introduced into the steam boiler at a flow of 12 t/h has a temperature of 80°C and a pressure of 3.4 barg. In the steam boiler the aqueous condensate is vaporized to a steam stream which is withdrawn from the steam boiler at a flow of 12 t/h and has a temperature of 145°C and a pressure of 3.1 barg. Said steam stream can be used for energy recovery. The cooled pentane gas stream is withdrawn from the steam boiler at a flow of 111 t/h and has a temperature of 142°C and a pressure of 14.9 barg. The heating duty of the steam boiler is 8340 kW.

The cooled pentane gas stream, withdrawn from the steam boiler, is transferred through a discharge drum and introduced into the pre-cooler for heating the heated n-pentane gas stream, withdrawn from the first heat exchanger (see above). Thereby, the cooled pentane gas stream is further cooled down Before entering the first heat exchanger as cooling medium for the hot fluid stream (see above) the n-pentane gas stream is further subjected to a cooling step (not shown) and performs a phase transition from gas phase to liquid. The liquid n-pentane stream has a a temperature of about 65°C and a pressure of about 1.45 barg (not shown) before being introdued in the first heat exchanger.
Electricity consumed in this process scenario is approx. 3000kW
Cooling duty process side is approx. 5450kW
Duty to Steam generation is approx. 8345kW
COP is approx. 2,763.

Figure 5 shows a projected example of a further embodiment of the heat recovery method of the invention in which the low pressure steam stream, obtained from the steam boiler as discussed exemplarily in the embodiment of Figure 4, is subjected to a further compressing step in a steam drum or desuperheater for producing a steam stream that has a temperature and pressure in the required range for direct use in the polymerization process. The example has been projected with ASPEN Plus.

A conventional heat pump compressor provides a pressurized and heated n-pentane gas stream, which is used for heating and vaporizing an aqueous condensate stream to a low pressure steam stream having a temperature of 130°C and a pressure of 1.62 barg. Said low pressure steam stream is then further pressurized in a steam drum or desuperheater to a temperature of 154°C and a pressure of 5.4 barg at a flow of 12 t/h for further use in the polymerization process.

The electrical power of the heat pump compressor is 3557 kW.

The coefficient of performance (COP) is 2.356.

Figure 6 shows a projected example of a further embodiment of the heat recovery method of the invention in which the low pressure steam stream, obtained from the steam boiler as discussed exemplarily in the embodiment of Figure 4, is subjected to a further compressing step in an adapted compressor heat pump for producing a steam stream that has a temperature and pressure in the required range for direct use in the polymerization process. The example has been projected with ASPEN Plus.

The heat pump compressor is adapted with an additional steam compressor. The low pressure steam stream from the embodiment of Figure 5 having a temperature of 130°C and a pressure of 1.62 barg is instead introduced into said additional steam compressor of the heat pump compressor to produce the steam stream having a temperature of 154°C and a pressure of 5.4 barg at a flow of 12 t/h for further use in the polymerization process.

The electrical power of the adapted heat pump compressor is 2778 kW.

The coefficient of performance (COP) is 2.830.

The use of the adapted heat pump compressor of Figure 6 for providing 12 t/h of a steam stream of 154°C and 4.2 barg and n-pentane as first cooling medium provides the following benefits compared to the use of a conventional heat pump compressor together with a steam drum or desuperheater of Figure 5:
- reduction of electrical power needed: -779 kW
- energy saving: -21%
- COP improvement: 20.1%

## Claims

1. A method for recovering energy comprising the steps of:
a) Providing a hot fluid stream;
b) Thermally contacting the hot fluid stream with a first heat transfer fluid in a first heat exchanger, thereby transferring heat from the hot fluid stream to the first heat transfer fluid and obtaining a heated first heat transfer fluid having a temperature T₁ and a pressure p₁;
c) Subjecting the heated first heat transfer fluid to 2 to 5, preferably 2 to 4, most preferably 2 or 3 compressing steps to obtain a compressed first heat transfer fluid having a pressure p₂;
d) Thermally contacting the compressed first heat transfer fluid with an aqueous condensate in a second heat exchanger, thereby transferring heat from the compressed first heat transfer fluid to the aqueous condensate and vaporizing the aqueous condensate to obtain a steam stream;
e) Using the steam stream for energy recovery thereby obtaining a stream comprising an aqueous condensate;
wherein
- the ratio of pressure p₂ to pressure pi, p₂/p₁, is 5 to 50; and
- the steam stream used for energy recovery has temperature Tₛ is in the range of from 120 to 200°C, preferably from 130 to 170°C, more preferably from 135 to 150°C and pressure pₛ is in the range of from 2.0 to 15.5 barg, preferably from 2.7 to 7.9 barg, more preferably from 3.1 to 4.8 barg.

2. The method according to claim 1, wherein the hot fluid stream has a temperature Tf of from 20 to 150°C, more preferably from 25 to 130°C, most preferably from 30 to 110°C.

3. The method according to claims 1 or 2, wherein the first heat transfer fluid is selected from refrigerants selected from hydrocarbons, such as propane, isobutene, n-butane, cyclopropane, ethane, n-pentane, isopentane, cyclopentane or mixtures thereof, halogenated hydrocarbons like hydrochlorocarbons, hydrochlorofluorocarbons, hydrofluorocarbons or mixtures thereof, such as methyl chloride dichloromethane monofluorodichloromethane, monochlorodifluoromethane, trichlorotrifluoroethane, 1,2-dichlorotetrafluoroethane, 2,2-dichloro-1,1,1-trifluoroethane, 1,1-difluoromethane or mixtures thereof, natural refrigerants such as ammonia, carbon dioxide or sulphur dioxide, or nanofluids.

4. The method according to any one of the preceding claims, wherein the first heat transfer fluid before entering the first heat exchanger is liquid and has a temperature T₀ of from 15 to 75°C, more preferably from 20 to 72°C, most preferably from 25 to 70°C.

5. The method according to any one of the preceding claims, wherein in step b) the first heat transfer fluid is vaporized to obtain a vaporized heated first heat transfer fluid having a temperature T1 and a pressure p1.

6. The method according to any one of the preceding claims, wherein T1 is in the range of from 30 to 80°C, preferably from 40 to 75°C, more preferably from 50 to 70°C and/or pressure p1 is in the range of from 0.5 to 2.0 barg, preferably from 0.7 to 1.8 barg, more preferably from 1.0 to 1.5 barg.

7. The method according to any one of the preceding claims, wherein pressure p2 is in the range of from 10.0 to 20.0 barg, preferably from 12.0 to 18.0 barg, more preferably from 14.0 to 16.0 barg.

8. The method according to any one of the preceding claims, wherein in the compressing steps c) the temperature of the heated first heat transfer fluid is increased to a temperature T2 and temperature T2 is 50 K to 250 K, preferably 65 K to 150 K, most preferably 75 K to 125 K higher than the temperature T1.

9. The method according to any one of the preceding claims, wherein the first heat transfer fluid withdrawn from the second heat exchanger in step d) is redirected to the first heat exchanger and is used as first heat transfer fluid in step b).

10. The method according to any one of the preceding claims, wherein the steam stream is compressed in at least one, such as 1 to 5, preferably 2 to 4, most preferably 2 or 3 compressing step(s) to obtain a compressed steam stream having the temperature Tₛ and the pressure pₛ.

11. The method according to any one of the preceding claims, wherein the aqueous condensate obtained from the used steam stream is used for thermally contacting the compressed first heat transfer fluid with said aqueous condensate in the second heat exchanger.

12. A facility for recovering energy comprising:
• a first heat exchanger for transferring heat from a hot fluid stream to a first heat transfer fluid to obtain a heated first heat transfer fluid having a temperature T₁ and a pressure p₁;
• at least one, such as one or two, preferably one heat pump compressor(s), whereby each heat pump compressor comprises 2 to 5, more preferably 2 to 4, most preferably 2 or 3 compression stages connected in series for compressing the heated first heat transfer fluid to obtain a compressed first heat transfer fluid having a pressure p₂;
• a second heat exchanger for transferring heat from the compressed first heat transfer fluid to an aqueous condensate to obtain a steam stream;
• means for using the steam stream for energy recovery thereby obtaining a stream comprising an aqueous condensate;
• means for transporting the heated first heat transfer fluid from the first heat exchanger to the first upstream means for compressing the heated first heat transfer fluid;
• means for transporting the compressed first heat transfer fluid from one upstream compression stage for compressing the heated first heat transfer fluid to the next downstream compression stage for compressing the heated first heat transfer fluid in the series of compression stages for compressing the heated first heat transfer fluid;
• means for transporting the compressed first heat transfer fluid having a pressure p₂ from the last means for compressing the heated first heat transfer fluid in the series to the second heat exchanger; and
• means for transporting the aqueous condensate to the second heat exchanger; and
• means for transporting the steam stream from the second heat exchanger to the means for using the steam stream for energy recovery.

13. The facility according to claim 12 further comprising
• one or more, preferably 1 to 5, more preferably 1 to 3, most preferably 1 or 2 means for compressing the steam stream, wherein 2 to 5, preferably 2 to 3, most preferably 2 means for compressing the steam stream are connected in series, to obtain a steam stream having a temperature Ts and a pressure ps, preferably at least one, such as one or two, preferably one heat pump compressor(s), whereby each heat pump compressor comprises one or more, preferably 1 to 5, more preferably 2 to 4, most preferably 2 or 3 compression stages, wherein 2 to 5, preferably 2 to 3, most preferably 2 compression stages are connected in series;
• means for transporting the steam stream from the second heat exchanger to the first upstream means for compressing the steam stream;
• optionally means for transporting the steam stream from one upstream means for compressing the steam stream to the next downstream means for compressing the steam stream in the series of means for compressing the steam stream; and
• means for transporting the steam stream having a temperature Ts and a pressure ps from the last means for compressing the steam stream in the series to the means for using the steam stream for energy recovery.

14. The facility according to claim 13, wherein 2 to 5, more preferably 2 to 4, most preferably 2 or 3 compression stages connected in series for compressing the heated first heat transfer fluid having a temperature T₁ and a pressure p₁ to obtain a compressed first heat transfer fluid having a pressure p₂ and the one or more, preferably 1 to 5, more preferably 1 to 3, most preferably 1 or 2 means for compressing the steam stream, wherein 2 to 5, preferably 2 to 3, most preferably 2 means for compressing the steam stream are connected in series, to obtain a compressed steam stream having a temperature Tₛ and a pressure pₛ are compression stages of the same heat pump compressor.

15. The facility according to any one of claims 12 to 14 further comprising Means for transporting the first heat transfer fluid from the second heat exchanger to the first heat exchanger.

16. The facility according to any one of claims 12 to 15 wherein the means for transporting the aqueous condensate to the second heat exchanger are means for transporting the aqueous condensate from the means for using the steam stream to the second heat exchanger.

## Patentansprüche

1. Ein Verfahren zur Energierückgewinnung, das die folgenden Schritte umfasst:
a) Bereitstellen eines heißen Fluidstroms;
b) Thermisches Inkontaktbringen des heißen Fluidstroms mit einem ersten Wärmeübertragungsfluid in einem ersten Wärmetauscher, wodurch Wärme von dem heißen Fluidstrom auf das erste Wärmeübertragungsfluid übertragen wird und ein erwärmtes erstes Wärmeübertragungsfluid mit einer Temperatur T₁ und einem Druck p₁ erhalten wird;
c) Unterziehen des erwärmten ersten Wärmeübertragungsfluids 2 bis 5, vorzugsweise 2 bis 4, am meisten bevorzugt 2 oder 3 Kompressionsstufen, um eine komprimiertes erstes Wärmeübertragungsfluid mit einem Druck p₂ zu erhalten;
d) Thermisches Inkontaktbringen des komprimierten ersten Wärmeübertragungsfluids mit einem wässrigen Kondensat in einem zweiten Wärmetauscher, wodurch Wärme von dem komprimierten ersten Wärmeübertragungsfluid auf das wässrige Kondensat übertragen und das wässrige Kondensat verdampft wird, um einen Dampfstrom zu erhalten;
e) Verwendung des Dampfstroms zur Energierückgewinnung, wodurch ein Strom mit einem wässrigen Kondensat erhalten wird;
wobei
- das Verhältnis von Druck p₂ zu Druck p₁, p₂/p₁, 5 bis 50 beträgt; und
- der für die Energierückgewinnung verwendete Dampfstrom eine Temperatur Tₛ im Bereich von 120 bis 200°C, vorzugsweise von 130 bis 170°C, besonders bevorzugt von 135 bis 150°C und einen Druck pₛ im Bereich von 2,0 bis 15,5 bar, vorzugsweise von 2,7 bis 7,9 bar, besonders bevorzugt von 3,1 bis 4,8 bar aufweist.

2. Verfahren gemäß Anspruch 1, wobei der heiße Fluidstrom eine Temperatur Tf von 20 bis 150°C, vorzugsweise von 25 bis 130°C und besonders bevorzugt von 30 bis 110°C aufweist.

3. Verfahren gemäß Anspruch 1 oder 2, wobei das erste Wärmeübertragungsfluid aus Kältemitteln ausgewählt ist, die aus Kohlenwasserstoffen, wie Propan, Isobuten, n-Butan, Cyclopropan, Ethan, n-Pentan, Isopentan, Cyclopentan oder Gemischen davon, halogenierten Kohlenwasserstoffen wie Chlorkohlenwasserstoffen, Fluorchlorkohlenwasserstoffen, Fluorkohlenwasserstoffe oder deren Gemische, wie Methylchlorid, Dichlormethan, Monofluordichlormethan, Monochlordifluormethan, Trichlortrifluorethan, 1,2-Dichlortetrafluorethan, 2,2-Dichlor-1,1,1-trifluorethan, 1,1-Difluormethan oder deren Gemische, natürliche Kältemittel wie Ammoniak, Kohlendioxid oder Schwefeldioxid oder Nanofluide ausgewählt sind.

4. Verfahren gemäß einem der vorhergehenden Ansprüche, wobei das erste Wärmeübertragungsfluid vor dem Eintritt in den ersten Wärmetauscher flüssig ist und eine Temperatur T₀ von 15 bis 75°C, bevorzugter von 20 bis 72°C, am meisten bevorzugt von 25 bis 70°C aufweist.

5. Verfahren gemäß einem der vorhergehenden Ansprüche, wobei in Schritt b) das erste Wärmeübertragungsfluid verdampft wird, um ein verdampftes, erhitztes erstes Wärmeübertragungsfluid mit einer Temperatur T1 und einem Druck p1 zu erhalten.

6. Verfahren gemäß einem der vorhergehenden Ansprüche, wobei T1 im Bereich von 30 bis 80°C, vorzugsweise von 40 bis 75°C, besonders bevorzugt von 50 bis 70°C liegt und/oder der Druck p1 im Bereich von 0,5 bis 2,0 barg, vorzugsweise von 0,7 bis 1,8 barg, besonders bevorzugt von 1,0 bis 1,5 barg liegt.

7. Verfahren gemäß einem der vorhergehenden Ansprüche, wobei der Druck p2 im Bereich von 10,0 bis 20,0 barg, vorzugsweise von 12,0 bis 18,0 barg, besonders bevorzugt von 14,0 bis 16,0 barg liegt.

8. Verfahren gemäß einem der vorhergehenden Ansprüche, wobei in den Kompprimierungsschritten c) die Temperatur des erhitzten ersten Wärmeübertragungsfluids auf eine Temperatur T2 erhöht wird und die Temperatur T2 50 K bis 250 K, vorzugsweise 65 K bis 150 K, besonders bevorzugt 75 K bis 125 K höher ist als die Temperatur T1.

9. Verfahren gemäß einem der vorhergehenden Ansprüche, wobei das erste Wärmeübertragungsfluid, das in Schritt d) aus dem zweiten Wärmetauscher abgezogen wird, zum ersten Wärmetauscher umgeleitet und in Schritt b) als erstes Wärmeübertragungsfluid verwendet wird.

10. Verfahren gemäß einem der vorhergehenden Ansprüche, wobei der Dampfstrom in mindestens einem, wie 1 bis 5, vorzugsweise 2 bis 4, am meisten bevorzugt 2 oder 3 Verdichtungsschritten verdichtet wird, um einen verdichteten Dampfstrom mit der Temperatur Tₛ und dem Druck pₛ zu erhalten.

11. Verfahren Gemäß einem der vorhergehenden Ansprüche, bei dem das aus dem verbrauchten Dampfstrom gewonnene wässrige Kondensat für den thermischen Kontakt des komprimierten ersten Wärmeübertragungsfluids mit dem wässrigen Kondensat im zweiten Wärmetauscher verwendet wird.

12. Anlage zur Energierückgewinnung, die Folgendes umfasst:
• einen ersten Wärmetauscher zum Übertragen von Wärme von einem heißen Fluidstrom auf ein erstes Wärmeübertragungsfluid, um ein erwärmtes erstes Wärmeübertragungsfluid mit einer Temperatur T₁ und einem Druck p₁ zu erhalten;
• mindestens einen, wie z. B. einen oder zwei, vorzugsweise einen Wärmepumpenkompressor(en), wobei jeder Wärmepumpenkompressor 2 bis 5, vorzugsweise 2 bis 4, am meisten bevorzugt 2 oder 3 in Reihe geschaltete Kompressionsstufen zum Komprimieren der erhitzten ersten Wärmeträgerflüssigkeit umfasst, um eine komprimierte erste Wärmeträgerflüssigkeit mit einem Druck p₂ zu erhalten;
• einen zweiten Wärmetauscher zum Übertragen von Wärme von dem komprimierten ersten Wärmeübertragungsfluid auf ein wässriges Kondensat, um einen Dampfstrom zu erhalten;
• Mittel zur Verwendung des Dampfstroms zur Energierückgewinnung, wodurch ein Strom mit einem wässrigen Kondensat erhalten wird;
• Mittel zum Transport des erhitzten ersten Wärmeübertragungsfluids vom ersten Wärmetauscher zu den ersten stromaufwärts gelegenen Mitteln zum Verdichten des erhitzten ersten Wärmeübertragungsfluids;
• Mittel zum Transportieren des komprimierten ersten Wärmeübertragungsfluids von einer stromaufwärts gelegenen Kompressionsstufe zum Komprimieren des erhitzten ersten Wärmeübertragungsfluids zur nächsten stromabwärts gelegenen Kompressionsstufe zum Komprimieren des erhitzten ersten Wärmeübertragungsfluids in der Reihe von Kompressionsstufen zum Komprimieren des erhitzten ersten Wärmeübertragungsfluids;
• Mittel zum Transportieren des komprimierten ersten Wärmeübertragungsfluids mit einem Druck p₂ von dem letzten Mittel zum Komprimieren des erhitzten ersten Wärmeübertragungsfluids in der Reihe zu dem zweiten Wärmetauscher; und
• Mittel zum Transportieren des wässrigen Kondensats zum zweiten Wärmetauscher; und
• Mittel zur Beförderung des Dampfstroms vom zweiten Wärmetauscher zu den Mitteln zur Verwendung des Dampfstroms für die Energierückgewinnung.

13. Anlage gemäß Anspruch 12 umfassend ferner
• ein oder mehrere, vorzugsweise 1 bis 5, stärker bevorzugt 1 bis 3, am meisten bevorzugt 1 oder 2 Mittel zur Verdichtung des Dampfstroms, wobei 2 bis 5, vorzugsweise 2 bis 3, am meisten bevorzugt 2 Mittel zur Verdichtung des Dampfstroms in Reihe geschaltet sind, um einen Dampfstrom mit einer Temperatur Ts und einem Druck ps zu erhalten, vorzugsweise mindestens einen, wie einen oder zwei, vorzugsweise einen Wärmepumpenkompressor bzw. Wärmepumpenkompressoren, wobei jeder Wärmepumpenkompressor eine oder mehrere, vorzugsweise 1 bis 5, mehr bevorzugt 2 bis 4, am meisten bevorzugt 2 oder 3 Verdichtungsstufen umfasst, wobei 2 bis 5, vorzugsweise 2 bis 3, am meisten bevorzugt 2 Verdichtungsstufen in Reihe geschaltet sind;
• Mittel zum Transportieren des Dampfstroms vom zweiten Wärmetauscher zum ersten stromaufwärts gelegenen Mittel zum Verdichten des Dampfstroms;
• optional Mittel zum Transportieren des Dampfstroms von einem stromaufwärts gelegenen Mittel zum Verdichten des Dampfstroms zum nächsten stromabwärts gelegenen Mittel zum Verdichten des Dampfstroms in der Reihe von Mitteln zum Verdichten des Dampfstroms; und
• Mittel zum Transport des Dampfstroms mit einer Temperatur Ts und einem Druck ps von den letzten Mitteln zur Verdichtung des Dampfstroms in der Reihe zu den Mitteln zur Verwendung des Dampfstroms zur Energierückgewinnung.

14. Anlage gemäß Anspruch 13, wobei 2 bis 5, bevorzugter 2 bis 4, am meisten bevorzugt 2 oder 3 in Reihe geschaltete Verdichtungsstufen zur Verdichtung des erwärmten ersten Wärmeübertragungsfluids mit einer Temperatur T₁ und einem Druck p₁ zur Gewinnung eines verdichteten ersten Wärmeübertragungsfluids mit einem Druck p₂ und der einen oder mehreren, bevorzugt 1 bis 5, vorzugsweise 1 bis 3, am meisten bevorzugt 1 oder 2 Mittel zur Verdichtung des Dampfstroms, wobei 2 bis 5, vorzugsweise 2 bis 3, am meisten bevorzugt 2 Mittel zur Verdichtung des Dampfstroms in Reihe geschaltet sind, um einen verdichteten Dampfstrom mit einer Temperatur Tₛ und einem Druck pₛ zu erhalten, Verdichtungsstufen desselben Wärmepumpenkompressors sind.

15. Anlage gemäß einem der Ansprüche 12 bis 14 umfassend ferner
Mittel zum Transport des ersten Wärmeübertragungsfluids von dem zweiten Wärmetauscher zu dem ersten Wärmetauscher.

16. Anlage gemäß einem der Ansprüche 12 bis 15, wobei die Mittel zum Transport des wässrigen Kondensats zum zweiten Wärmetauscher Mittel zum Transport des wässrigen Kondensats von den Mitteln zur Nutzung des Dampfstroms zum zweiten Wärmetauscher sind.

## Revendications

1. Procédé de récupération d'énergie comprenant les étapes de :
a) fourniture d'un flux de fluide chaud ;
b) mise en contact thermique du flux de fluide chaud avec un premier fluide de transfert de chaleur dans un premier échangeur de chaleur, en transférant ainsi la chaleur du flux de fluide chaud au premier fluide de transfert de chaleur et en obtenant un premier fluide de transfert de chaleur chauffé présentant une température T₁ et une pression p₁ ;
c) soumission du premier fluide de transfert de chaleur chauffé à 2 à 5, de préférence 2 à 4, et plus préférablement encore 2 ou 3 étapes de compression pour obtenir un premier fluide de transfert de chaleur comprimé présentant une pression p₂ ;
d) mise en contact thermique du premier fluide de transfert de chaleur comprimé avec un condensat aqueux dans un second échangeur de chaleur, en transférant ainsi la chaleur du premier fluide de transfert de chaleur comprimé au condensat aqueux et en vaporisant le condensat aqueux pour obtenir un flux de vapeur ;
e) utilisation du flux de vapeur pour la récupération d'énergie en obtenant ainsi un flux comprenant un condensat aqueux ;
dans lequel
- le rapport entre la pression p₂ et la pression p₁, p₂/p₁, est de 5 à 50 ; et
- le flux de vapeur utilisé pour la récupération d'énergie présente une température Tₛ dans la plage de 120 à 200 °C, de préférence de 130 à 170 °C, plus préférablement de 135 à 150 °C et la pression pₛ est dans la plage de 2,0 à 15,5 barg, de préférence de 2,7 à 7,9 barg, plus préférablement de 3,1 à 4,8 barg.

2. Procédé selon la revendication 1, dans lequel le flux de fluide chaud présente une température Tf de 20 à 150°C, plus préférablement de 25 à 130 °C, et plus préférablement encore de 30 à 110 °C.

3. Procédé selon les revendications 1 ou 2, dans lequel le premier fluide de transfert de chaleur est sélectionné parmi des réfrigérants sélectionnés parmi des hydrocarbures, tels que du propane, de l'isobutène, du n-butane, du cyclopropane, de l'éthane, du pentane, de l'isopentane, du cyclopentane ou des mélanges de ceux-ci, des hydrocarbures halogénés comme des hydrochlorocarbures, des hydrochlorofluorocarbures, des hydrofluorocarbures ou des mélanges de ceux-ci, tels que du chlorure de méthyle dichlorométhane monofluorodichlorométhane, du monochlorodifluorométhane, du trichlorotrifluoroéthane, du 1,2-dichlorotétrafluoroéthane, du 2,2-dichloro-1,1,1-trifluoroéthane, du 1,1-difluorométhane ou des mélanges de ceux-ci, des réfrigérants naturels tels que de l'ammoniac, du dioxyde de carbone ou du dioxyde de soufre, ou des nanofluides.

4. Procédé selon l'une des revendications précédentes, dans lequel le premier fluide de transfert de chaleur avant l'entrée dans le premier échangeur de chaleur est un liquide et présente une température T₀ de 15 à 75 °C, plus préférablement de 20 à 72 °C, et plus préférablement encore de 25 à 70 °C.

5. Procédé selon l'une des revendications précédentes, dans lequel dans l'étape b) le premier fluide de transfert de chaleur est vaporisé pour obtenir un premier fluide de transfert de chaleur chauffé vaporisé présentant une température T1 et une pression p1.

6. Procédé selon l'une des revendications précédentes, dans lequel T1 est dans la plage de 30 à 80 °C, de préférence de 40 à 75 °C, plus préférablement de 50 à 70 °C et/ou la pression p1 est dans la plage de 0,5 à 2,0 barg, de préférence de 0,7 à 1,8 barg, plus préférablement de 1,0 à 1,5 barg.

7. Procédé selon l'une des revendications précédentes, dans lequel p2 est dans la plage de 10,0 à 20,0 barg, de préférence de 12,0 à 18,0 barg, plus préférablement de 14,0 à 16,0 barg.

8. Procédé selon l'une des revendications précédentes, dans lequel dans les étapes de compression c) la température du premier fluide de transfert chauffé est augmentée à une température T2 et la température T2 est de 50 K à 250 K, de préférence de 65 K à 150 K, et plus préférablement encore de 75 K à 125 K plus élevée que la température T1.

9. Procédé selon l'une des revendications précédentes, dans lequel le premier fluide de transfert de chaleur retiré du second échangeur de chaleur dans l'étape d) est redirigé vers le premier échangeur de chaleur et est utilisé comme premier fluide de transfert de chaleur dans l'étape b).

10. Procédé selon l'une des revendications précédentes, dans lequel le flux de vapeur est comprimé dans au moins une, tel que 1 à 5, de préférence 2 à 4, et plus préférablement encore 2 ou 3 étapes de compression pour obtenir un flux de vapeur comprimé présentant la température Tₛ et la pression pₛ.

11. Procédé selon l'une des revendications précédentes, dans lequel le condensat aqueux obtenu à partir du flux de vapeur utilisé est utilisé pour la mise en contact thermique du premier fluide de transfert de chaleur comprimé avec ledit condensat aqueux dans le second échangeur de chaleur.

12. Installation de récupération d'énergie comprenant :
• un premier échangeur de chaleur pour le transport de chaleur d'un flux de fluide chaud à un premier fluide de transfert de chaleur pour obtenir un premier fluide de transfert de chaleur chauffé présentant une température T₁ et une pression p₁ ;
• au moins un, tel qu'un ou deux, de préférence un compresseur de pompe à chaleur, moyennant quoi chaque compresseur de pompe à chaleur comprend 2 à 5, de préférence 2 à 4, et plus préférablement encore 2 ou 3 étages de compression raccordés en série pour comprimer le premier fluide de transfert de chaleur chauffé pour obtenir un premier fluide de transfert de chaleur comprimé présentant une pression p₂ ;
• un second échangeur de chaleur pour le transfert de chaleur du premier fluide de transfert de chaleur comprimé à un condensat aqueux pour obtenir un flux de chaleur ;
• des moyens d'utilisation du flux de vapeur pour la récupération d'énergie en obtenant ainsi un flux comprenant un condensat aqueux ;
• des moyens de transport du premier fluide de transfert de chaleur chauffé du premier échangeur de chaleur aux premiers moyens amont pour la compression du premier fluide de transfert de chaleur chauffé ;
• des moyens de transport du premier fluide de transfert de chaleur comprimé d'un étage de compression amont pour la compression du premier fluide de transfert de chaleur à l'étage de compression aval suivant pour la compression du premier fluide de transfert de chaleur chauffé dans la série d'étages de compression pour la compression du premier fluide de transfert de chaleur chauffé ;
• des moyens de transport du premier fluide de transfert de chaleur chauffé présentant une pression p₂ des derniers moyens de compression du premier fluide de transfert de chaleur chauffé dans la série au second échangeur de chaleur ; et
• des moyens de transport du condensat aqueux vers le second échangeur de chaleur ; et
• des moyens de transport du flux de vapeur du second échangeur de chaleur aux moyens d'utilisation du flux de vapeur pour la récupération d'énergie.

13. Installation selon la revendication 12 comprenant en outre
• un ou plusieurs, de préférence 1 à 5, plus préférablement 1 à 3, et plus préférablement encore 1 à 2 moyens de compression du flux de vapeur, dans lequel 2 à 5, de préférence 2 à 3, et plus préférablement encore 2 moyens de compression du flux de vapeur sont raccordés en série, pour obtenir un flux de vapeur présentant une température Ts et une pression ps, de préférence au moins un, tel qu'un ou deux, de préférence un compresseur de pompe à chaleur, moyennant quoi chaque compresseur de pompe à chaleur comprend un ou plusieurs, de préférence 1 à 5, plus préférablement 2 à 4, et plus préférablement encore 2 ou 3 étages de compression, dans lequel 2 à 5, de préférence 2 à 3, et plus préférablement encore 2 étages de compression sont raccordés en série ;
• des moyens de transport du flux de chaleur du second échangeur de chaleur aux premiers moyens amont pour la compression du flux de vapeur ;
• des moyens de transport optionnels du flux de vapeur d'un moyen amont pour la compression du flux de chaleur au moyen aval suivant pour la compression du flux de chaleur dans la série de moyens de compression du flux de chaleur ; et
• des moyens de transport du flux de vapeur présentant une température Ts et une pression ps des derniers moyens de compression du flux de vapeur dans la série aux moyens d'utilisation du flux de vapeur pour la récupération d'énergie.

14. Installation selon la revendication 13, dans lequel 2 à 5, de préférence 2 à 4, et plus préférablement encore 2 ou 3 étages de compression raccordés en série pour la compression du premier fluide de transfert de chaleur chauffé présentant une température T₁ et une pression p₁ pour obtenir un premier fluide de transfert de chaleur comprimé présentant une pression p₂ et un ou plusieurs, de préférence 1 à 5, de préférence 1 à 3, et plus préférablement encore 1 ou 2 moyens de compression du flux de vapeur, dans lequel 2 à 5, de préférence 2 à 3, et plus préférablement encore 2 moyens de compression du flux de vapeur sont raccordés en série, pour obtenir un flux de vapeur comprimé présentant une température Tₛ et une pression p, sont des étages de compression du même compresseur de pompe à chaleur.

15. Installation selon l'une des revendications 12 à 14 comprenant en outre des moyens de transport du premier fluide de transfert de chaleur du second échangeur de chaleur au premier échangeur de chaleur.

16. Installation selon l'une des revendications 12 à 15 dans lequel les moyens de transport du condensat aqueux vers le second échangeur de chaleur sont des moyens de transport du condensat aqueux des moyens d'utilisation du flux de vapeur au second échangeur de chaleur.
